(19) Europäisches Patentamt
European Patent Office
Office européen des brevets

(11) **EP 1 846 730 B1**

(12) **EUROPÄISCHE PATENTSCHRIFT**

(45) Veröffentlichungstag und Bekanntmachung des Hinweises auf die Patenterteilung:
**23.03.2016 Patentblatt 2016/12**

(51) Int Cl.:
**G01C 15/00** *(2006.01)* **G01S 17/08** *(2006.01)*
**G01S 7/51** *(2006.01)*

(21) Anmeldenummer: **05850445.7**

(22) Anmeldetag: **07.12.2005**

(86) Internationale Anmeldenummer:
**PCT/EP2005/056575**

(87) Internationale Veröffentlichungsnummer:
**WO 2006/081889 (10.08.2006 Gazette 2006/32)**

(54) **VERFAHREN ZUR VERMESSUNG DER L[NGE EINER STRECKE SOWIE VORRICHTUNG ZUR DURCHF]HRUNG DES VERFAHRENS**

METHOD FOR THE MEASUREMENT OF THE LENGTH OF A LINE AND DEVICE FOR CARRYING OUT SAID METHOD

PROCEDE POUR MESURER LA LONGUEUR D'UNE SECTION ET DISPOSITIF POUR METTRE EN OEUVRE CE PROCEDE

(84) Benannte Vertragsstaaten:
**CH DE IT LI**

(30) Priorität: **31.01.2005 DE 102005004321**

(43) Veröffentlichungstag der Anmeldung:
**24.10.2007 Patentblatt 2007/43**

(73) Patentinhaber: **Robert Bosch GmbH**
**70442 Stuttgart (DE)**

(72) Erfinder:
- **SKULTETY-BETZ, Uwe**
**70771 Leinfelden-echterdingen (DE)**
- **HAASE, Bjoern**
**70182 Stuttgart (DE)**

- **STIERLE, Joerg**
**71111 Waldenbuch (DE)**
- **WOLF, Peter**
**70771 Leinfelden-echterdingen (DE)**
- **FLINSPACH, Gunter**
**71229 Leonberg (DE)**
- **PAHUD, Cédric**
**CH-1110 Morges (CH)**
- **RENZ, Kai**
**70771 Leinfelden-echterdingen (DE)**
- **SCHULTE, Clemens**
**70197 Stuttgart (DE)**

(56) Entgegenhaltungen:
**DE-A1- 10 016 309      DE-A1- 10 253 669**
**DE-A1- 19 836 812**

EP 1 846 730 B1

## Beschreibung

Die Erfindung betrifft ein Verfahren zur Vermessung der Länge einer Strecke mittels einer Distanzmessvorrichtung sowie eine Vorrichtung zur Durchführung des Verfahrens.

Stand der Technik

Distanzmessgeräte und insbesondere handgehaltene Distanzmessgeräte, wie bspw. optoelektronische Distanzmesser oder Ultraschallentfernungsmessgeräte sind als solche seit längerer Zeit bekannt und kommerziell erhältlich. Diese Geräte senden einen modulierten Messstrahl, bspw. einen Lichtstrahl in Form eines Laserstrahls aus, der auf ein gewünschtes Zielobjekt, dessen Abstand zum Gerät zu ermitteln ist, ausgerichtet wird. Das von dem angepeilten Zielobjekt reflektierte oder gestreute, rücklaufende Messsignal wird von einem Sensor des Gerätes zumindest teilweise wieder detektiert und zur Ermittlung des gesuchten Abstandes zwischen dem Messgerät und dem Zielobjekt verwendet.

Typische Anwendungsgebiete derartiger Geräte liegen bspw. im Bereich des Handwerks, des Baugewerbes oder auch des Innenausbaus, bei denen ein Anwender vor die Aufgabe gestellt wird, bestimmte Strecken, Flächen oder Volumina möglichst schnell und mit einer hohen Genauigkeit zu ermitteln. Um bspw. ein Aufmass zu erstellen, wird eine derartige Distanzmessvorrichtung mit einer ihr zugeordneten Referenzebene bspw. an eine erste Wand angehalten und durch Betätigung der Bedieneinheit der Vorrichtung wird ein Messsignal ausgesendet, sodass bspw. ein gesuchter Abstand zu einer zweiten Wand gemessen werden kann. Da das Messsignal bei derartigen Distanzmessvorrichtungen typischerweise in eine Richtung ausgesendet wird, ist es erforderlich, die Referenzebene des Messgerätes, d.h. diejenige Ebene, auf die mit dem Gerät gemessene Abstände bezogen werden, möglichst exakt in den Nullpunkt der zu bestimmenden Strecke anzuordnen.

Aus der DE 102 53 669 A1 ist ein Laserdistahzhandmessgerät mit Extremmesswertverfahren bekannt, bei dem in einem ersten Schritt ein Eingabemittel des Laserdistanzhandmessgerätes betätigt wird, das eine Messfolge auslöst, während welcher in einem zweiten Schritt vom Laserdistanzhandmessgerät ausgelöste Einzelmessungen von Distanzen erfolgen. In einem dritten Schritt wird von dem Laserdistahzhandmessgerät der DE 102 53 669 A1 aus den Einzelmessungen zumindest ein Maximalwert bzw. Minimalwert bzgl. der Messfolge bestimmt. Aus dem zumindest einen Minimalwert und dem zumindest einen Maximalwert ermittelt das Laserdistanzhandmessgerät eine Extremwertdifferenz bzgl. der Messfolge. Aus dieser Extremwertdifferenz kann dann bspw. auf die exakte Lage von Objekten wie etwa Leitungen oder Verkleidungen relativ zu Flächen, wie etwa Wänden oder Decken geschlossen werden. So kann bspw. die Tiefe eines Wandvorsprungs über das Extremwertmessverfahren der DE 102 53 669 A1 bestimmt werden.

Aus der DE 198 36 812 A1 ist ein Handlasermessgerät zur Entfernungsmessung nach dem Phasen- oder Laufzeitmessverfahren bekannt, bei dem in der Recheneinheit des Messgerätes eine Vielzahl von Messroutinen zur Lösung anwendungsbezogener Messaufgaben abgespeichert sind. Diese Messroutinen sind jeweils über eine Taste eines Tastenfeldes des Messgerätes abrufbar und auf dem Anzeigefeld des Gerätes darstellbar. Der Anwender des Handlasermessgerätes der DE 198 36 812 A1 wird nach der Auswahl einer solchen Messroutine über eine im Anzeigenfeld des Gerätes dargestellte Menüfolge zu einzelnen nacheinander auszuführenden Einzelstreckenmessungen aufgefordert, aus deren Ergebnis eine Recheneinheit des Messgerätes eine gewünschte Strecke, Fläche oder ein gesuchtes Volumen errechnet.

Ausgehend von den Geräten des Standes der Technik liegt der vorliegenden Erfindung die Aufgabe zugrunde, einem Anwender einen einfachen und somit bedienerfreundlichen Messablauf zur Vermessung von Strecken an die Hand zu geben, mit dem er insbesondere nicht direkt messbare Entfernungen bestimmen kann.

Die der Erfindung zugrunde liegende Aufgabe wird gelöst durch ein Verfahren zur Vermessung der Länge einer Strecke mit den Merkmalen des Anspruchs 1 bzw. durch ein Messgerät mit den Merkmalen des Anspruchs 7.

Vorteile der Erfindung

Bei dem erfindungsgemäßen Verfahren zur Vermessung der Länge einer Strecke wird in einem ersten Schritt ein Eingabemittel einer Distanzmessvorrichtung betätigt, welche daraufhin eine Messfolge von Distanzmessungen auslöst. Während der Messfolge werden in einem zweiten Schritt des erfindungsgemäßen Verfahrens Einzelmessungen von Distanzen des Messgerätes quer zu der zu vermessenden Strecke durchgeführt. Aus diesen Einzelmessungen wird in einem weiteren Schritt zumindest ein Maximalwert und zumindest ein Minimalwert der Querdistanzen des Messgerätes zu der zu vermessenden Strecke bestimmt und aus diesem Maximalwert und dem Minimalwert die gesuchte Länge der Strecke ermittelt.

Der beanspruchte, indirekte Messmodus zur Bestimmung der Länge einer Strecke ermöglicht es einem Anwender, in einem Ablauf, lediglich durch Schwenken der Distanzmessvorrichtung und somit des Messsignals über die zu vermessende Strecke, die Länge dieser Strecke zu bestimmen. Der Anwender muss sich insbesondere nicht mehr an eine bestimmte Messabfolge von Einzelmessungen halten. Er braucht lediglich noch die Messfolge zu starten und das Messsignal über die zu vermessende Strecke zu schwenken. Aus den während dieses Scans über die zu vermessende Strecke ermittelten Distanzen zwischen der Messvorrichtung und der zu vermessenden Strecke wird dann die gesuchte Länge der Strecke bestimmt.

Dies kann in vorteilhafter Weise durch die Distanzmessvorrichtung selbst erfolgen.

In vorteilhafter Weise ist keinerlei Detektion eines Winkels notwendig. Dies ermöglicht ein kompaktes und preiswertes Messgerät, da auf die Integration eines Winkelmessers in eine entsprechende Distanzmessvorrichtung verzichtet werden kann.

Ein entsprechender Auswertealgorithmus wählt aus der Messfolge von Binzelmessungen zumindest einen Maximalwert und mindestens einen Minimalwert der gemessenen Querdistanzen des Messgerätes zur zu vermessenden Strecke aus und ermittelt aus diesen, insbesondere unter Verwendung trigonometrischer Funktionen, die gesuchte Länge der vermessenen Strecke. Durch die Verwendung der Extremwerte bei der Bestimmung der Streckenlänge ist es nicht notwendig, einen Winkel explizit aufzunehmen, d.h. zu detektieren, da der gemessene Minimalwert der Querdistanz zu der zu vermessenden Strecke die Lotrichtung definiert und somit das Vorliegen eines 90° Winkels zwischen der aktuellen Messrichtung und der Orientierung der zu vermessenden Strecke impliziert.

Durch die in den abhängigen Ansprüchen aufgeführten Merkmale sind vorteilhafte Weiterbildungen des im unabhängigen Anspruch angegebenen Verfahrens möglich.

Eine vorteilhafte Ausgestaltung des erfindungsgemäßen Verfahrens ermittelt die Länge der zur vermessenden Strecke aus zumindest zwei Maximalwerten, insbesondere den Werten zweier lokaler Maxima der Distanz zwischen der Distanzmessvorrichtung und der zu vermessenden Strecke und einem Minimalwert dieser gemessenen Strecken. Bei einer derartigen Auswertung ist die Vermessung der Länge der zu bestimmenden Strecke unabhängig von der Position der Distanzmessvornchtung relativ zur Position der Strecke möglich. Die Strecke kann in vorteilhafter Weise aus einer Reihe von Binzelmessungen, die quer zu der zu bestimmenden Strecke erfolgen, bestimmt werden. Dies bedeutet für einen Anwender eine deutliche Vereinfachung der Messprozedur. Bei diesem Messverfahren braucht ein Anwender von seiner Position aus lediglich den Startpunkt der zu vermessenden Strecke anzuvisieren und das Messsignal bis zum Endpunkt der zu vermessenden Strecke über diese zu schwenken. Insbesondere ist ein Anlegen eines Referenzpunktes der Distanzmessvorrichtung im Nullpunkt der zu vermessenden Strecke nicht mehr erforderlich. Dies ermöglicht die Vermessung mit herkömmlichen Verfahren nur schwer zugänglicher Strecken.

In vorteilhafter Weise wird das erfindungsgemäße Verfahren durch Betätigung von Eingabemitteln an der Distanzmessvorrichtung gestartet und durch erneutes Betätigen dieser Eingabemittel beendet.

In alternativen Ausführungsformen des erfindungsgemäßen Verfahrens kann vorgesehen sein, dass das Verfahren solange durchgeführt wird, wie die Eingabemittel der Distanzmessvorrichtung betätigt werden, d. h. dass die Vermessung der Streckenlänge durch das Loslassen der Eingabemittel beendet wird.

So kann es bspw. auch vorgesehen sein, dass die jeweilige ermittelte Länge der zu vermessenden Strecke schon während der Messfolge aktuell über eine Ausgabeeinheit der verwendeten Distanzmessvorrichtung einem Anwender mitgeteilt wird. Auf diese Weise ist es bspw. möglich, nicht nur die Länge einer unbekannten Strecke zu bestimmen, sondern auch eine Teilstrecke vorgegebener Länge auf einer längeren, unbekannten Streckenlänge abzutragen.

Eine Distanzmessvorrichtung zur Durchführung des erfindungsgemäßen Verfahrens weist in vorteilhafter Weise zumindest ein Eingabemittel auf, welches die Aktivierung einer Messfolge von Querdistanzmessungen zwischen der Messvorrichtung und der zu vermessenden Strecke ermöglicht. Aus dieser Messfolge werden dann die Extremwerte, bspw. zwei lokale Maxima und ein absolutes Minimum der Querdistanzen des Messgerätes zu der zu vermessenden Strecke durch eine Rechnereinheit der Distanzmessvorrichtung ermittelt und aus diesen Extremwerten die Länge der zu vermessenden Strecke berechnet.

Die so ermittelte Streckenlänge bzw. auch die Querdistanzen der Distanzmessvorrichtung zu der zu vermessenden Strecke können über eine akustische oder optische Ausgabeeinheit, bspw. über ein optisches Display einem Anwender der Distanzmessvorrichtung mitgeteilt werden.

Eine vorteilhafte Ausgestaltung einer Distanzmessvorrichtung zur Durchführung des erfindungsgemäßen Verfahrens weist zumindest eine Lichtquelle, bspw. einen Laser, insbesondere eine Halbleiterlaserdiode, zur Erzeugung bzw. Aussendung modulierter optischer Strahlung auf.

Mit Hilfe dieser modulierten Strahlung werden über ein Laufzeit- bzw. Phasenmessverfahren die benötigten Distanzen zu der zu vermessenden Strecke ermittelt.

Die Distanzmessvorrichtung zur Durchführung des erfindungsgemäßen Verfahrens kann in vorteilhafter Weise als ein Laserentfernungsmesser, insbesondere als ein handgehaltener Laserentfernungsmesser, ausgebildet werden. Dies ermöglicht die Vermessung der Länge einer Strecke dadurch, dass ein Anwender das Messsignal, insbesondere in moduliertes optisches Signal von einem Anfangspunkt der zu vermessenden Strecke hin zu einem Endpunkt der Strecke schwenkt und aus einer Mehrzahl von Distanzmessungen quer zur zu vermessenden Strecke, ohne die Messung eines Schwenkwinkels, die Länge der zu vermessenden Strecke bestimmen kann.

Das erfindungsgemäße Verfahren ermöglichst es somit einem Anwender die Länge einer Strecke zu bestimmen, ohne dass er die dazu verwendete Distanzmessvorrichtung zur exakten Anlage in einen Nullpunkt der Strecke bringen muss. Insbesondere gestattet das erfindungsgemäße Verfahren die Vermessung einer Streckenlänge durch die Vermessung von Distanzen quer zur Orientierung der zur vermessenden Strecke.

Weitere Vorteile des erfindungsgemäßen Verfahrens bzw. einer Distanzmessvorrichtung zur Durchführung des erfindungsgemäßen Verfahrens ergeben sich aus den Zeichnungen sowie der zugehörigen Beschreibung.

Zeichnung

In der Zeichnung ist ein Ausführungsbeispiel für das erfindungsgemäße Verfahren zur Entfernungsmessung dargestellt, welches in der nachfolgenden Beschreibung näher erläutert werden soll. Die Figuren der Zeichnung, deren Beschreibung sowie die auf den Gegenstand der Erfindung gerichteten Ansprüche enthalten zahlreiche Merkmale in Kombination. Ein Fachmann wird diese Merkmale bzw. die darauf gerichteten Ansprüche auch einzeln betrachten und zu weiteren, sinnvollen Kombinationen und Ansprüchen zusammenfassen.

Es zeigen:

Figur 1    eine schematische Darstellung der Vermessung einer Streckenlänge zur Verdeutlichung des erfindungsgemäßen Verfahrens,

Figur 2    ein erstes Anwendungsbeispiel für das erfindungsgemäße Verfahren in einer schematisierten Darstellung einer Messsituation,

Figur 3    ein zweites Anwendungsbeispiel des erfindungemäßen Verfahrens in einer schematisierten Darstellung einer alternativen Messsituation,

Figur 4    ein Flussdiagramm zur Darstellung einiger Verfahrensschritte des erfindungsgemäßen Verfahrens,

Figur 5    eine schematische Darstellung einer Winkelmessung unter Anwendung des erfindungsgemäßen Verfahrens.

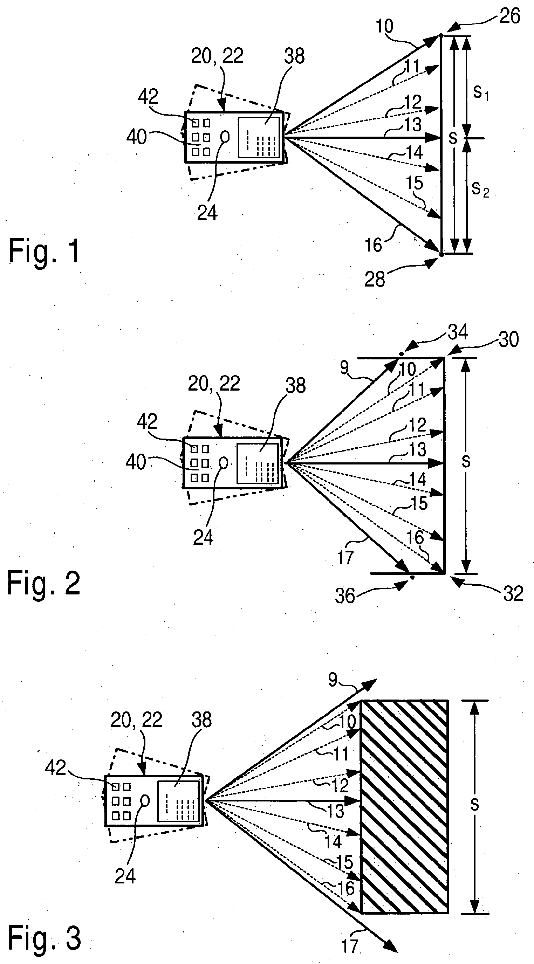

Figur 1 zeigt die dem erfindungsgemäßen Verfahren zugrunde liegende Messsituation in einer schematisierten Darstellung. Das erfindungsgemäße Verfahren ermöglicht die Bestimmung der Länge einer Strecke s mittels einer Messfolge von Distanzmessungen, die quer zu der zu vermessenden Strecke ausgeführt: werden. Dabei wird eine Distanzmessvorrichtung 20, welche im Ausführungsbeispiel der Figur 1 in Form eines Laserentfernungsmessers 22 ausgebildet ist, über ein Eingabemittel, welches bspw. durch eine Messtaste 24 gebildet ist, zu einer Mehrzahl von Einzelmessungen 10 bis 16 aktiviert. Dazu visiert ein Anwender von seinem Standpunkt aus mit dem Messstrahl 10 einen Anfangspunkt 26 der zu vermessenden Strecke an und startet die Distanzmessung zwischen dem Messgerät 22 und der zu vermessenden Strecke s. Dieser erste Messwert wird von einem Speichermedium bzw. einer entsprechend gestalteten Software, welche in der Distanzmessvorrichtung 20 vorhanden ist, abgespeichert.

Der Anwender schwenkt nun die Distanzmessvorrichtung 20 in der Art, dass das Messsignal die zu vermessende Strecke s abscannt. Während dieser Schwenkbewegung werden eine Mehrzahl von Einzelmessungen 10 bis 16 der jeweiligen Distanz entlang der aktuellen Schwenkrichtung durchgeführt. Bei jeder dieser Messung wird die jeweilige Querdistanz des Messgerätes zur Strecke bestimmt, in dem der Abstand des Messgerätes zu einem Auftreffpunkt auf der Strecke gemessen wird. So besteht die Messfolge von Distanzmessungen im Ausführungsbeispiel der Figur 1 aus sieben einzelnen Distanzmessungen 10 bis 16. Die Distanzen dieser Einzelmessungen werden von einer Auswerteeinheit der Distanzmessvorrichtung 20 ermittelt und es wird zumindest die minimale Distanz, entsprechend der Distanzmessung 13 des Ausführungsbeispiels in Figur 1 und ein zweites lokales Maximum (Im Ausführungsbeispiel der Figur list dies Messung 16), welches nach Durchlaufen des Minimums erreicht wird, gespeichert.

Erreicht die Schwenkbewegung des Messstrahls einen vom Anwender gewünschten Endpunkt 28 der Strecke, so kann der Anwender durch nochmalige Betätigung der Messtaste oder bspw. auch durch ein Loslassen der Messtaste den Messvorgang beenden. Aus der während der Schwenkbewegung über die zu vermessende Strecke durchgeführte Messfolge von Distanzmessungen werden der Minimalwert, im Ausführungsbeispiel der Figur 1 entsprechend der Einzelmessung 13 sowie zwei lokale Maximalwerte, im Ausführungsbeispiel der Figur 1 die Einzelmessungen 10 bzw. 16 ausgewählt und einer Recheneinheit der Distanzmessvornchtung 22 zugeführt.

Aus diesen drei gespeicherten Messwerten lässt sich unter Ausnutzung trigonometrischer Beziehungen die gesuchte Länge der Strecke s ermitteln. So ergibt sich die Strecke s als Summe zweier Teilstrecken $s_1$ und $s_2$, wobei sich die Strecken $s_1$ bzw. $s_2$ über den Satz des Pythagoras aus den ermittelten Querdistanzen der Messungen 10 und 13 bzw. 16 und 13 in bekannter Weise ermitteln lassen. Durch die Verwendung der Extremwerte bei der Bestimmung der Streckenlänge ist es insbesondere nicht notwendig, einen Schwenkwinkel der Vorrichtung zu erfassen, d.h. zu vermessen, da der gemessene Minimalwert 13 der Querdistanz zu der zu vermessenden Strecke s die Lotrichtung definiert und somit das Vorliegen eines 90° Winkels zwischen der aktuellen Messrichtung 13 und der Orientierung der zu vermessenden Strecke s impliziert. Auf diese Weise kann durch einfach oder mehrfache Anwendung des Satzes des Pythagoras die Länge der gesuchten Strecke ermitteltwerden.

In vorteilhafter Weise kann die Länge der zu vermessenden Strecke durch Vermessung von Distanzen quer zu dieser Strecke ermittelt werden. Die Distanzmessvorrichtung muss bei dem erfindungsgemäßen Verfahren nicht mehr parallel zu der zu vermessenden Strecke ausgerichtet werden. Darüber hinaus ist es auch nicht mehr notwendig, einen Referenzpunkt der Distanzmessvorrichtung in eine Anfangpunkt der zu vermessenden Strecke zu legen. Auch werden die benötigten Messdaten zur Bestimmung der gesuchten Streckenlänge während einer Schwenkbewegung des Anwenders von der Distanzmessvorrichtung selbständig aufgenommen. Der Anwender muss nicht mehr eine Reihe von Einzelmessungen durchführen, um die benötigten Daten zu erhalten.

Der Laserentfernungsmesser 22 weist im Ausführungsbeispiel der Figur 1 eine Ausgabeeinheit in Form eines graphischen Displays 38 auf, auf dem die Ergebnisse von Einzelmessungen, sowie die Größe der zu vermessenden Strecke wiedergegeben werden kann. Darüber hinaus besitzt die Distanzmessvorrichtung ein Bedienfeld 40 mit einer Mehrzahl von Bedieneinheiten, über die einzelne Messprogramme, wie bspw. eine Strecken-, Flächen- oder Volumenmessung, aufgerufen werden können. Über eine Bedientaste 42 des Bedienfeldes 40 kann bspw. auch das erfindungsgemäße Verfahren zur Bestimmung der Länge einer Strecke ausgewählt werden. Die Messung kann sodann über Betätigung der Messtaste 24 gestartet und beendet werden.

Das beanspruchte Messverfahren ermöglicht es somit dem Anwender, in einem einzelnen Messvorgang, lediglich durch ein Schwenken der Distanzmessvorrichtung über die zu vermessende Strecke, die gesuchte Länge dieser Strecke zu bestimmen. Dazu braucht er lediglich das modulierte Messsignal entlang der zu vermessenden Strecke zu führen. In vorteilhafter Weise wählt ein Steuerungs- und Auswerteprögramm, welches in der Distanzmessvorrichtung integriert sein kann, aus der während der Schwenkbewegung durchgeführte Distanzmessungen zwischen dem Distanzmessgerät und der zu vermessenden Strecke, einen Minimalwert der Distanzen sowie zwei lokale Maximalwerte aus. Aus diesen drei ermittelten Distanzen lässt sich die Länge der zu vermessenden Strecke rechnerisch ermitteln. Dies ist in vorteilhafter Weise ohne die Detektion einer Winkelinformation möglich. Auf die Integration eines Winkelmessers in die Distanzmessvorrichtung kann daher in vorteilhafter Weise verzichtet werden. Der Anwender sollte lediglich darauf achten, das Distanzmessgerät um einen definierten Drehpunkt zu verschwenken. So kann ein Anwender unter Ausnutzung des erfindungsgemäßen Verfahrens mit einem Distanzmessgerät die Länge einer Strecke ermitteln, indem er lediglich Distanzmessungen quer zu der zu vermessenden Strecke ausführt. Insbesondere ist es auch nicht erforderlich, die Distanzmessvorrichtung bzw. einen Referenzpunkt dieser Vorrichtung in einem Anfangs- oder Endpunkt der zu vermessenden Strecke anzulegen.

Mit dem erfindungsgemäßen Verfahren lässt sich so mit relativ guter Genauigkeit die Länge einer Strecke auch aus großen Distanzen heraus vermessen.

Das erfindungsgemäße Verfahren setzt voraus, dass ein Anwender den Anfangs- und Endpunkt der zu vermessenden Strecke mit dem abtastenden Messsignal relativ gut findet, da diese Punkte zumeist auch die lokalen Maxima der Distanzmessung quer zur zu vermessenden Strecke bestimmen und somit auch die Länge der gesuchten Strecke definieren.

In der Realität, d.h. der konkreten Messsituation vor Ort, ergeben sich Bedingungen, die ein Auffinden des Anfangs- bzw. Endpunktes der zu vermessenden Strecke für einen Anwender erschweren.

Das mit Figur 2 schematisch dargestellte Szenarium könnte bspw. eine Raumecke darstellen. Wenn bei der ersten und letzten Messung zur Abtastung der Strecke s die Raumecke 30 und 32 verfehlt wird und anstelle dessen mit der Messung 9 bzw. 17 ein Punkt 34 bzw. 36 angepeilt und vermessen wird, ermittelt der Auswertealgorithmus des erfindungsgemäßen Verfahrens trotzdem als lokale Maxima der Querdistanzen der Messfolge 9 bis 17 die Messungen 10 und 16. Hierbei wird bspw. das lokale Maximum 10 bzw. 16 über die Auswertung der relativen Änderungen der einzelnen Querdistanzen zueinander ermittelt. Ein lokales Maximum der Distanzen quer zur vermessenden Strecke ergibt sich dabei in Richtung der Einzelmessung 10, da die Distanzen der Messungen 9, 11 oder 12 kürzer sind. Somit kann zur Berechnung der Länge der gesuchten Strecke s der richtige Extremwert ermittelt werden.

Figur 3 zeigt ein ebenfalls mögliches Szenarium, was zu einer Verfälschung von Messwerten führen könnte. Das in Figur 3 schematisch dargestellte Szenarium könnte bspw. eine Hauswand darstellen, deren Länge s zu bestimmen ist. Wenn bei der ersten und letzten Messung 9 bzw. 17 der Messfolge die Wand verfehlt würde, würde das Messgerät falsche Maximalwerte der Querdistanzen zwischen der Distanzmessvorrichtung 22 und der zu vermessenden Strecke s ermitteln. Da aber in diesem Fall ein großer Entfernungssprung zweier unmittelbar aufeinander folgender Einzelmessungen (hier Messungen 9 und 10 bzw. 16 und 17) stattfindet, kann dies von einer entsprechenden Auswertelogik, die beispielsweise in einer Software im Gerät hinterlegt ist, erfasst werden und bei der Ermittlung der Länge der Strecke s berücksichtigt werden.

Bei dem erfindungsgemäßen Verfahren werden daher die Extremwerte (lokale Maxima, bzw. Minima) zur Bestimmung der Länge der gesuchten Strecke mittels einer Rechenvorschrift ermittelt, die die relative Änderung der Distanzen innerhalb der Messfolge berücksichtigt. Somit können große diskrete Sprünge in den ermittelten Distanzen der einzelnen Quermessungen ausgeschlossen werden. Bei dem in Figur 3 schematisch dargestellten Szenarium heißt dies, dass bspw. die Messung 17 nicht zur Bestimmung der Streckenlänge der Strecke s herangezogen wird, da diese Messung einen deutlichen Sprung in der gemessenen Distanz zwischen dem Messgerät 22 und der zu vermessenden Wand aufweist im Vergleich zur benachbarten und unmittelbar zuvor durchgeführten Messung 16. Als lokales Maximum der Distanzen wird stattdessen von der Rechen- und Auswerteeinheit der Messvorrichtung die Distanz der Messung 16 verwendet, da dieser Wert der letzte Wert in einer Reihe von Querdistanzen ist, die sich kontinuierlich und gleichmäßig beginnend mit der Messung 13 vergrößern.

Im Ausführungsbeispiel der Figur 3 würde daher die Länge der Strecke s ermittelt aus den Distanzmessungen 10, 13 und 16. Das erfindungsgemäße Verfahren erlaubt es somit, die zur Berechnung des Messergebnisses heranzuziehenden Extremwerte mittels eines Rechenalgorithmus einer Plausibilitätsprüfung zu unterwerfen, in der bspw. abgefragt wird, ob zwei aufeinander folgende Werte der Messfolge von Distanzmessungen stark unterschiedliche Messergebnisse liefern.

Dieser Algorithmus zur Überprüfung der Plausibilität der ermittelten Extremwerte bedeutet für einen Anwender eine enorme Erleichterung bei der Bedienung und Anwendung des erfindungsgemäßen Verfahrens. In dem erfindungsgemäßen Messmodus kann er somit auch ungefähr vor dem eigentlichen Startpunkt der zu vermessenden Strecke mit der Messreihe und seinem Abschwenken beginnen und die Messreihe notfalls auch über den Endpunkt der zu vermessenden Strecke hinaus durchführen, da die Programmsteuerung des erfindungsgemäßen Verfahrens die richtigen, d.h. plausiblen Messwerte durch einen entsprechenden Filteralgorithmus auswählt. I

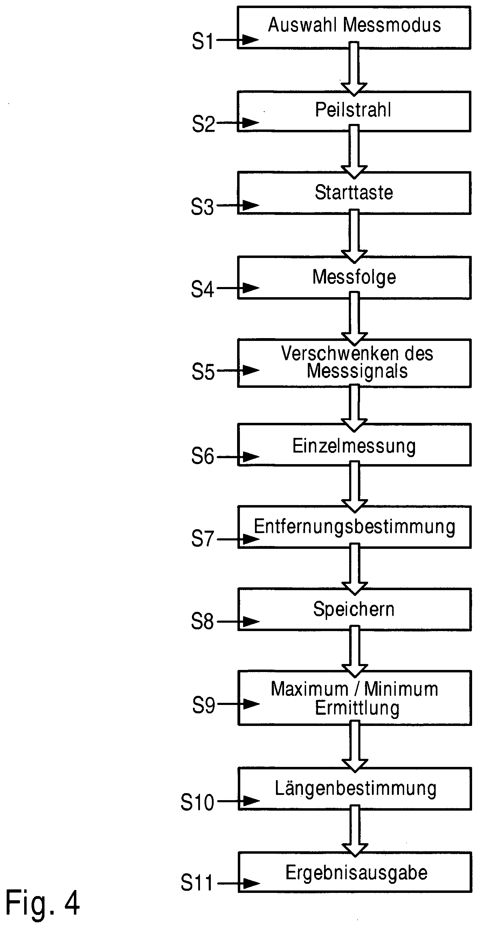

Figur 4 zeigt in der Art eines Ablauf- oder Flussdiagramms einzelne Schritte des erfindungsgemäßen Verfahrens.

In einem Schritt $S_1$ wird an einer Distanzmessvorrichtung zur Durchführung des erfindungsgemäßen Verfahrens ein das Verfahren durchführender Messmodus ausgewählt. Dies kann bspw. durch Betätigung einer Modustaste 42 des Bedienfeldes 40, wie in den Figuren 1 bis 3 gezeigt, erfolgen. Durch Auswahl des Messmodus 42 wird die erfindungsgemäße Distanzmessvorrichtung auf das erfindungsgemäße Verfahren eingestellt und beispielsweise als Verfahrensschritt $S_2$ kontinuierlicher Peilstrahl aus der Distanzmessvorrichtung ausgesendet Durch Betätigung einer Starttaste, bspw. der Messtaste 24 der Ausführungsbeispiele 1 bis 3, wird in einem Schritt $S_3$ eine Messfolge von Distanzmessungen gestartet ($S_4$). Während diese Messfolge von Distanzmessungen schwenkt ein Anwender in einem weiteren Schritt $S_5$ des Verfahrens, das von der Distanzmessvorrichtung ausgesendete Messsignal über die zu vermessende Strecke, sodass in einem Verfahrensschritt $S_6$ Einzelmessungen von Distanzen zwischen der Messvorrichtung und der zu vermessenden Strecke erfolgen. Für diese Messfolge von Einzeldistanzmessungen werden in dem Verfahrensschritten $S_7$ die jeweiligen Engtfernungen bestimmt und in Verfahrensschritt $S_8$ in einem Speichermedium

abgelegt. In Verfahrensschritt $S_9$ werden die aktuellen lokalen Maxima und ein Minimum der Distanzen zwischen der Messvorrichtung und der zu vermessenden Strecke ermittelt. Alternativerweise könnte auch nur zumindest ein Maximalwert und zumindest ein Minimalwert der Distanzen zwischen der Messvorrichtung und der zu vermessenden Strecke ermittelt und abgespeichert werden. Aus diesen ermittelten Extremwerten der Querdistanzen zwischen Messgerät und der zu vermessenden Strecke wird in einem Verfahrensschritt $S_{10}$ unter Heranziehung bekannter trigoriometrischer Funktionen die Länge der gesuchten Strecke ermittelt. In einem Verfahrensschritt $S_{11}$ wird die Länge der zu vermessenden Strecke sowie bspw. die ermittelten Extremwerte in einer Ausgabeeinheit, bspw. einem optischen Display der Distanzmessvorrichtung dem Anwender übermittelt.

In einer alternativen Ausführungsform des erfindungsgemäßen Verfahrens kann bspw. vorgesehen sein, die jeweils während eines Vermessungsschwenks $S_{11}$ bereits zurückgelegte, d.h. aktuelle vom Messsignal überstrichene und mittels des beschriebenen Verfahren ermittelte Strecke, direkt dem Anwender zu übermitteln, bspw. indem diese auf einem Display der Distanzmessvorrichtung angezeigt wird. In einem derartigen Messmodus kann ein Anwender dann die Länge einer gewünschten Teilstrecke bspw. direkt auf einer Wand abtragen und markieren.

Bei einer speziellen Positionierung des Anwenders bzw. der Distanzmessvorrichtung kann das erfindungsgemäße Verfahren die Länge der gesuchten Strecke auch mittels lediglich eines Minimalwertes und eines Maximalwertes von Querdistanzen der Distanzmessvorrichtung zu der zu vermessenden Strecke ermitteln. Hierbei ist es allerdings notwendig, dass die Messfolge mit der Minimaldistanz begonnen bzw. beendet wird. Dazu muss ein Anwender bzw. die Distanzmessvorrichtung senkrecht zur zu vermessenden Strecke und in Höhe des Anfangs- bzw. Endpunktes dieser Strecke positioniert sein. Die erfindungsgemäße Distanzmessvorrichtung kann diesem Spezialfall des erfindungsgemäßen Verfahrens durch einen separaten Messmodus Rechnung tragen, der bspw. durch eine spezielle Bedientaste des Bedienfeldes 40 ausgewählt werden kann. Insbesondere sollte die Auswertungssoftware so flexibel gestaltet werden, dass es keinerlei Rolle spielt, mit welchem Distanzmesswert, d.h. Maximum oder Minimum der Querdistanzen, ein Anwender seine Messfolge beginnt.

Dieses Verfahren ist insbesondere auch geeignet zum Abtragen einer vorbestimmten Länge.

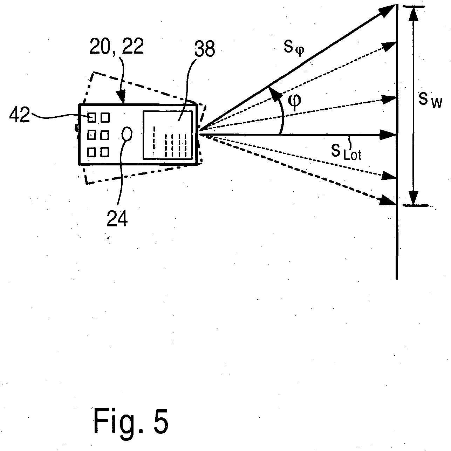

Das Verfahren eignet sich insbesondere auch dazu, die erfindungsgemäße Distanzmessvorrichtung als Winkelmesser zu benutzen, wie dies der schematischen Darstellung in der Figur 5 zu entnehmen ist. Wird die Messvorrichtung 20,22 zunächst entlang einer gewissen Strecke $s_w$, beispielsweise einer Wand, Mauer oder Decke verschwenkt, so dass das Lot, als minimaler Abstand zwischen der Strecke $s_w$ und der Distanzmessvorrichtung 20 bzw.22 bekannt ist, kann jeder Winkel $\varphi$

zu diesem Lot direkt berechnet werden. Es gilt:

$$\varphi = \arccos\,(s_{Lot} / s_\varphi)$$

Dabei bezeichnet die Strecke $s_{Lot}$ die lotrechte Entfernung zwischen der Distanzmessvorrichtung 20,22 und der abgescannten Strecke $s_w$. Die Strecke $s_\varphi$ bezeichnet die Entfernung zwischen der Distanzmessvorrichtung 20,22 und der abgescannten Strecke $s_w$ unter dem Winkel $\varphi$. Darüber hinaus lassen sich natürlich auch die Winkel $\varphi'$ zweier Richtungen $s_\varphi$ und $s_\varphi'$ bestimmen, die nicht dem Lot $s_{Lot}$ entsprechen.

Das erfindungsgemäße Verfahren bzw. eine Distanzmessvorrichtung zur Durchführung des erfindungsgemäßen Verfahrens ist nicht auf die in der Zeichnung und der zugehörigen Beschreibung dargestellten Ausführungsformen beschränkt.

Insbesondere ist das erfindungsgemäße Verfahren nicht beschränkt auf die Verwendung eines optischen Distanzmessgerätes. Das erfindungsgemäße Verfahren lässt sich in gleicher Weise bspw. auch mit einem Ultraschallentfernungsmesser oder aber auch einem Radarentfernungsmesser realisieren.


**Patentansprüche**

1. Verfahren zur Vermessung der Länge einer Strecke (s), insbesondere ein optisches Distanzmessverfahren, bei dem ein Eingabemittel (24,42) einer Distanzmessvorrichtung (20,22) betätigt wird, welche eine Messfolge von Distanzmessungen auslöst, während der Einzelmessungen (10-16) von Distanzen der Messvorrichtung (20,22) quer zu der zu vermessenden Strecke (s) erfolgen, wobei die Distanzmessvorrichtung während der Messfolge derart verschwenkt wird, dass das Messsignal über die zu vermessende Strecke geführt wird, wobei zumindest ein Maximalwert (10,16) und zumindest ein Minimalwert (13) der Distanzen aus der Messfolge bestimmt wird, und mittels des zumindest einen Maximalwerts (10,16) und des zumindest einen Minimalwerts (13) die Länge der Strecke (s) ermittelt wird.

2. Verfahren nach Anspruch 1, **dadurch gekennzeichnet, dass** die Länge der Strecke (s) aus zumindest zwei Maximalwerten (10,16), insbesondere den Werten zweier lokaler Maxima, und einem Minimalwert (13) der gemessenen Distanzen ermittelt wird.

3. Verfahren nach Anspruch 2, **dadurch gekennzeichnet, dass** die Extremwerte zur Bestimmung der Länge der Strecke mittels einer Rechenvorschrift ermittelt werden, die die relative Änderung der Distanzen der Messvorrichtung (20,22) quer zur Strecke innerhalb der Messfolge berücksichtigt.

4. Verfahren nach einem der vorhergehenden Ansprüche, **dadurch gekennzeichnet, dass** die Vermessung der Streckenlänge durch erneutes Betätigen der Eingabemittel (24) beendet wird.

5. Verfahren nach einem der vorhergehenden Ansprüche 1 bis 3, **dadurch gekennzeichnet, dass** die Vermessung der Streckenlänge durch Loslassen der Eingabemittel (24) beendet wird.

6. Verfahren nach einem der vorhergehenden Ansprüche, **dadurch gekennzeichnet, dass** die während einer Messfolge jeweils aktuell ermittelte Länge der Strecke (s) über eine Ausgabeeinheit (38) der Distanzmessvorrichtung (20,22) einem Anwender mitgeteilt wird.

7. Distanzmessvorrichtung (20,22) zur Durchführung des Verfahrens nach einem der vorhergehenden Ansprüche, wobei diese Distanzmessvorrichtung (20,22) zumindest ein Eingabemittel (40,24) zur Aktivierung einer Messfolge von Distanzmessungen zur Vermessung der Länge einer Strecke (s), ein Speichermedium zum Speichern von Distanzmesswerten und eine Recheneinheit zur Bestimmung von Maximal- und Minimalwerten der Distanzmesswerte sowie zur Bestimmung der Länge der Strecke (s) mittels zumindest eines Maximalwerts (10,16) und zumindest eines Minimalwerts, aufweist.

8. Distanzmessvorrichtung nach Anspruch 7, **dadurch gekennzeichnet, dass** es zumindest eine Ausgabeeinheit (38) zur Übermittlung der ermittelten Streckenlänge aufweist.

9. Distanzmessvorrichtung nach Anspruch 7 oder 8, **dadurch gekennzeichnet, dass** die Vorrichtung zumindest eine Lichtquelle zur Aussendung modulierter optischer Strahlung aufweist.

10. Distanzmessvorrichtung nach zumindest einem der Ansprüche 7 bis 9, **dadurch gekennzeichnet, dass** die Vorrichtung ein Laserentfernungsmesser (24), insbesondere ein handgehaltener Laserentfernungsmesser (24), ist.


**Claims**

1. Method for measuring the length of a section (s), in particular an optical distance-measuring method, in which an input means (24, 42) of a distance-measuring apparatus (20, 22) is actuated, which initiates a measurement sequence of distance measurements, during which individual measurements (10-16) of distances of the measuring apparatus (20, 22) transversely with respect to the section (s) to be measured are carried out, the distance-measuring apparatus being pivoted during the measurement sequence in such a manner that the measurement signal is guided via the section to be measured, at least one maximum value (10, 16) and at least one minimum value (13) of the distances being determined from the measurement sequence, and the length of the section (s) being determined using the at least one maximum value (10, 16) and the at least one minimum value (13).

2. Method according to Claim 1, **characterized in that** the length of the section (s) is determined from at least two maximum values (10, 16), in particular the values of two local maxima, and a minimum value (13) of the measured distances.

3. Method according to Claim 2, **characterized in that** the extreme values for determining the length of the section are determined using a calculation rule which takes into account the relative change in the distances of the measuring apparatus (20, 22) transversely with respect to the section within the measurement sequence.

4. Method according to one of the preceding claims, **characterized in that** the measurement of the section length is terminated by actuating the input means (24) again.

5. Method according to one of the preceding Claims 1 to 3, **characterized in that** the measurement of the section length is terminated by releasing the input means (24).

6. Method according to one of the preceding claims, **characterized in that** the length of the section (s) currently determined in each case during a measurement sequence is communicated to a user via an output unit (38) of the distance-measuring apparatus (20, 22).

7. Distance-measuring apparatus (20, 22) for carrying out the method according to one of the preceding claims, this distance-measuring apparatus (20, 22) having at least one input means (40, 24) for activating a measurement sequence of distance measurements for measuring the length of a section (s), a storage medium for storing distance measured values and a computing unit for determining maximum and minimum values of the distance measured values and for determining the length of the section (s) using at least one maximum value (10, 16) and at least one minimum value.

8. Distance-measuring apparatus according to Claim 7, **characterized in that** it has at least one output unit (38) for transmitting the determined section length.

9. Distance-measuring apparatus according to Claim 7 or 8, **characterized in that** the apparatus has at least one light source for emitting modulated optical radiation.

10. Distance-measuring apparatus according to at least one of Claims 7 to 9, **characterized in that** the apparatus is a laser rangefinder (24), in particular a handheld laser rangefinder (24).

**Revendications**

1. Procédé pour mesurer une étendue (s), en particulier, procédé de mesure de distance optique, selon lequel un moyen d'entrée (24, 42) d'un dispositif de mesure de distance (20, 22) est actionné, celui-ci déclenchant une série de mesures de distance pendant lesquelles sont effectuées des mesures individuelles (10-16) de distances du dispositif de mesure (20, 22) de manière transversale à l'étendue à mesurer (s), dans lequel le dispositif de mesure de distance est amené à pivoter pendant la série de mesures de manière à ce que le signal de mesure soit acheminé par l'intermédiaire de l'étendue à mesurer, dans lequel au moins une valeur maximale (10, 16) et au moins une valeur minimale (13) des distances sont déterminées à partir de la série de mesures et la longueur de l'étendue (s) est déterminée au moyen de l'au moins une valeur maximale (10, 16) et de l'au moins une valeur minimale (13).

2. Procédé selon la revendication 1, **caractérisé en ce que** la longueur de l'étendue (s) est déterminée à partir d'au moins deux valeurs maximales (10, 16), en particulier des valeurs de deux maxima locaux et d'une valeur minimale (13) des distances mesurées.

3. Procédé selon la revendication 2, **caractérisé en ce que** les valeurs extrêmes sont obtenues pour déterminer la longueur de l'étendue au moyen d'une règle de calcul qui prend en compte la variation relative des distances du dispositif de mesure (20, 22) transversalement à l'étendue au sein de la série de mesures.

4. Procédé selon l'une quelconque des revendications précédentes, **caractérisé en ce que** la mesure de la longueur de l'étendue est interrompue lorsque les moyens d'entrée (24) sont de nouveau actionnés.

5. Procédé selon l'une quelconque des revendications précédentes 1 à 3, **caractérisé en ce que** la mesure de la longueur de l'étendue est interrompue lorsque le moyen d'entrée (24) est relâché.

**6.** Procédé selon l'une quelconque des revendications précédentes, **caractérisé en ce que** la longueur actuelle respective de l'étendue (s) obtenue pendant une série de mesures est transmise à un utilisateur par l'intermédiaire d'une unité de sortie (38) du dispositif de mesure de distance (20, 22).

**7.** Dispositif de mesure de distance (20, 22) destiné à mettre en oeuvre le procédé selon l'une quelconque des revendications précédentes, dans lequel ledit dispositif de mesure de distance (20, 22) comprend au moins un moyen d'entrée (40, 24) destiné à activer une série de mesures fournissant des mesures de distance pour mesurer la longueur d'une étendue (s), un support de mémoire destiné à stocker des valeurs de mesures de distance et une unité de calcul destinée à déterminer des valeurs maximales et minimales des valeurs de mesure de distance et pour déterminer la longueur de l'étendue (s) au moyen d'au moins une valeur maximale (10, 16) et d'au moins une valeur minimale.

**8.** Dispositif de mesure de distance selon la revendication 7, **caractérisé en ce qu'**il comprend au moins une unité de sortie (38) destinée à transmettre la longueur d'étendue déterminée.

**9.** Dispositif de mesure de distance selon la revendication 7 ou 8, **caractérisé en ce que** le dispositif comprend au moins une source de lumière destinée à émettre un rayonnement optique modulé.

**10.** Dispositif de mesure de distance selon au moins l'une des revendications 7 à 9, **caractérisé en ce que** le dispositif est un dispositif de mesure de distance à laser (24), notamment un dispositif de mesure de distance à laser tenu à la main (24).

Fig. 1

Fig. 2

Fig. 3

S1 → Auswahl Messmodus

S2 → Peilstrahl

S3 → Starttaste

S4 → Messfolge

S5 → Verschwenken des Messsignals

S6 → Einzelmessung

S7 → Entfernungsbestimmung

S8 → Speichern

S9 → Maximum / Minimum Ermittlung

S10 → Längenbestimmung

S11 → Ergebnisausgabe

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10253669 A1
- DE 19836812 A1